# EUROPEAN PATENT SPECIFICATION

(11) **EP 1 047 544 B1**
(45) Date of publication and mention of the grant of the patent: **12.06.2002**
(21) Application number: 99957292.8
(22) Date of filing: 09.11.1999
(51) Int. Cl.: B29D 31/50, B29D 31/51

(54) **MOLD HOLDER FOR MOLDS FOR MANUFACTURING BOOTS OR THE LIKE MADE OF PLASTICS**
FORMHALTER FÜR FORMWERKZEUGE ZUR HERSTELLUNG VON STIEFELN ODER SCHUHEN AUS KUNSTSTOFF
SUPPORT DE MOULE DESTINE AUX MOULES SERVANT A LA FABRICATION DE BOTTES OU D'ARTICLES SIMILAIRES EN PLASTIQUE

(30) Priority: 13.11.1998 IT PD980265
(43) Date of publication of application: 02.11.2000
(73) Proprietor: Main Group S.p.A., 35129 Padova (IT)
(72) Inventor: LORENZIN, Lorenzo, I-35031 Abano Terme (IT)
(74) Representative: Modiano, Guido, Dr.-Ing.
(86) International application number: EP9908564
(87) International publication number: WO0029204

(56) References cited:
- FR-A- 1 476 421
- PATENT ABSTRACTS OF JAPAN vol. 014, no. 053 (C-0683), 31 January 1990 (1990-01-31) & JP 01 280405 A (ACHILLES CORP), 10 November 1989 (1989-11-10)

## Description

### Technical Field

The present invention relates to a mold holder for molds for manufacturing boots or the like made of plastics.

### Background Art

It is known that machines for the injection-molding of boots made of PVC or thermoplastic material substantially comprise a turntable provided with a series of modules, known as mold holders, and one or more injection assemblies.

The molds are fitted in the mold holders.

The turntable revolves at preset intervals and places the mold holders at the injectors, which inject the material in the molds through the adapted holes provided therein.

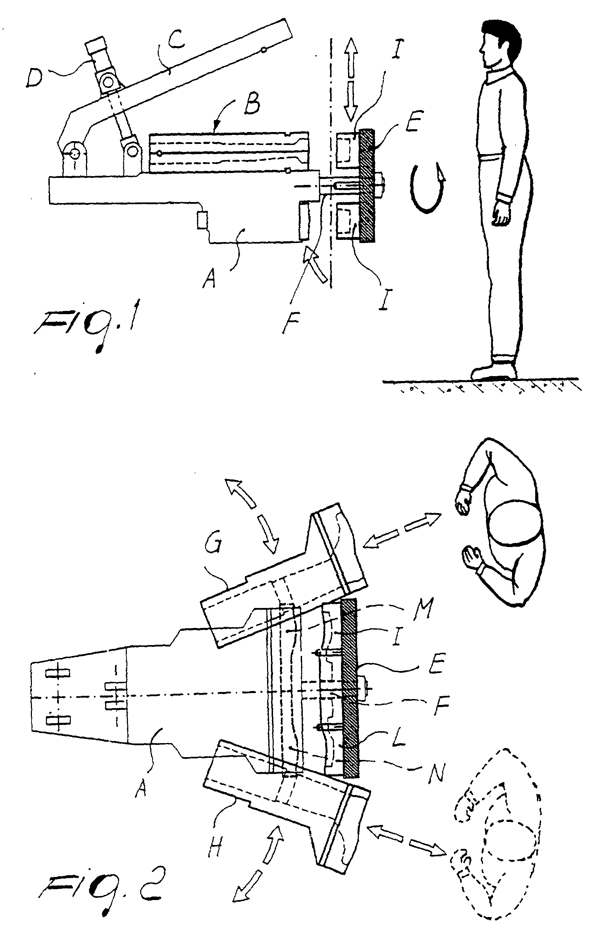

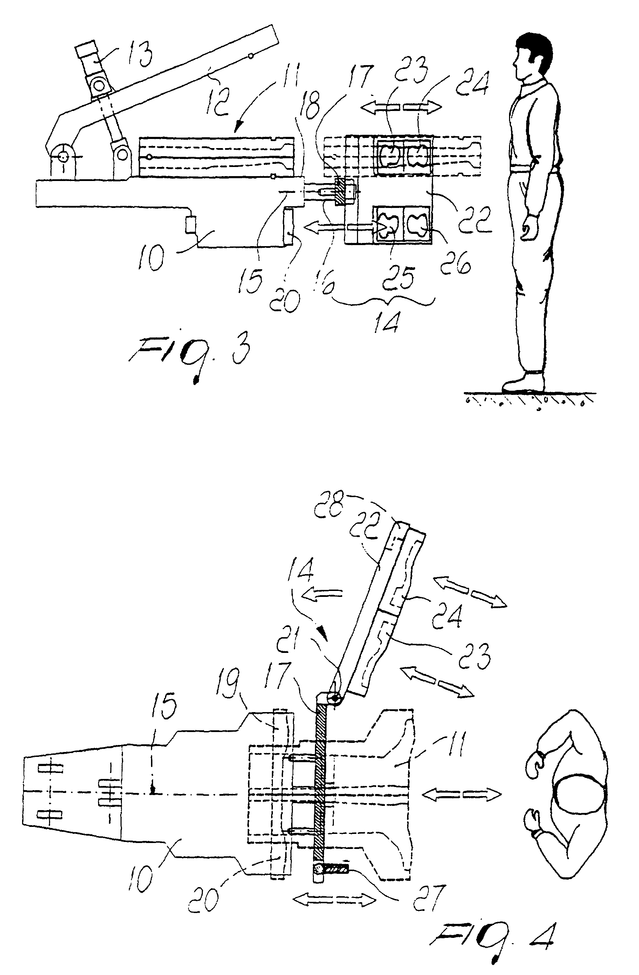

With reference to Figures 1 and 2 of the accompanying drawings, a mold holder currently comprises a footing A for supporting a mold B with an upper closure cover C which is articulated thereto and is moved by a hydraulic cylinder D.

The articulation is provided about an axis which is horizontal and lies to the rear with respect to the region where the mold B is inserted.

The supporting footing A is provided. in a front region. with a front door E which is moved by a hydraulic cylinder, not shown, and is rotatable about the axis of a pivot F which is longitudinal with respect to the footing A.

The mold B (see Figure 2) in turn comprises:
-- a right shell G, which is in turn divided into an upper part and a lower part;
-- a left shell H, which is in turn divided into an upper part and a lower part;
-- a right sole I and a left sole L supported by the door E;
-- a left dummy mold M;
-- a right dummy mold N.

The door E is meant, by rotating, to move the soles I or L located in a downward region at the upper position so as to be able to injection-mold boots in two or three colors during several steps.

Although their use is now well-established, these mold holders have the drawback that the mold fitting operation is rather troublesome, first of all because of the shape of the mold holder and then because of the weight and dimensions of the mold (the shells G and H can weigh up to 150 kg each).

The bulk of the cover C and the door E makes it necessary to fit the shells G and H by lateral insertion.

In some cases, the cover C can be opened more widely in order to allow the descent from above of the shells G and H, for example by means of a bridge crane.

Furthermore, the dummy molds M and N must be fitted below the footing A with difficulties as regards viewing and access.

The best access for the mold fitting operations would be from the front, but front access is obstructed by the door E, whose bulk is also considerable.

The complexity of the fitting of the mold in the mold holder also clashes with current market requirements. which demand short fitting times in order to avoid downtimes, with consequent productivity loss or prolonged downtimes, with the consequent need to discharge the material that is present in the injectors in order to avoid its degeneration, leading to production loss.

JP-01280405 and FR-1476421 disclose molds for injection molding boots on the like.

### Summary of the Invention

The aim of the present invention is therefore to provide a mold holder with a structure which eliminates the drawbacks noted above in conventional types and in particular allows easier and faster removal and refitting of the molds.

Within the scope of this aim. an object of the present invention is to shorten machine downtimes and accordingly increase productivity.

Another object is to avoid the need to discharge the material that is present in the injector during machine downtimes.

Another object is to provide a mold holder whose structure allows to automate the replacement of the molds, for example by means of pallets and computerized magazines.

Another object is to provide a mold holder which can be manufactured with conventional equipment and systems.

This aim, these objects and others which will become apparent hereinafter are achieved by a mold holder for molds for manufacturing boots or the like made of plastics which comprises a footing for supporting a mold, with an upper closure cover articulated to said footing and with a front door for soles which can rotate about an axis which is longitudinal with respect to the mold, and said door comprises a transverse frame which is supported by said footing, can rotate about said longitudinal axis and is arranged below the surface that supports said mold, said frame supporting at least one sole support which is pivoted so as to rotate about a corresponding axis which lies outside the front dimensions of said mold.

### Brief description of the drawings

Further characteristics and advantages of the invention will become apparent from the detailed description of two embodiments thereof, illustrated only by way of non-limitative example in the accompanying drawings, wherein:
Figures 1 and 2 are schematic side and top views of a mold holder according to the prior art;
Figure 3 is a schematic side view of the mold holder according to a first embodiment of the present invention;
Figure 4 is a schematic top view of the mold holder of Figure 3 without the upper cover and with the door open;
Figure 5 is a partial schematic top view of the mold holder of Figure 3 without the upper cover and with the door closed;
Figure 6 is a front view of the door related to the mold holder of Figure 3;
Figure 7 is a schematic side view of the mold holder according to a second embodiment of the present invention;
Figure 8 is a schematic top view of the mold holder of Figure 7 without the cover and with the door open;
Figure 9 is a front view of the door related to the mold holder of Figure 7.

### Wavs of carrying out the Invention

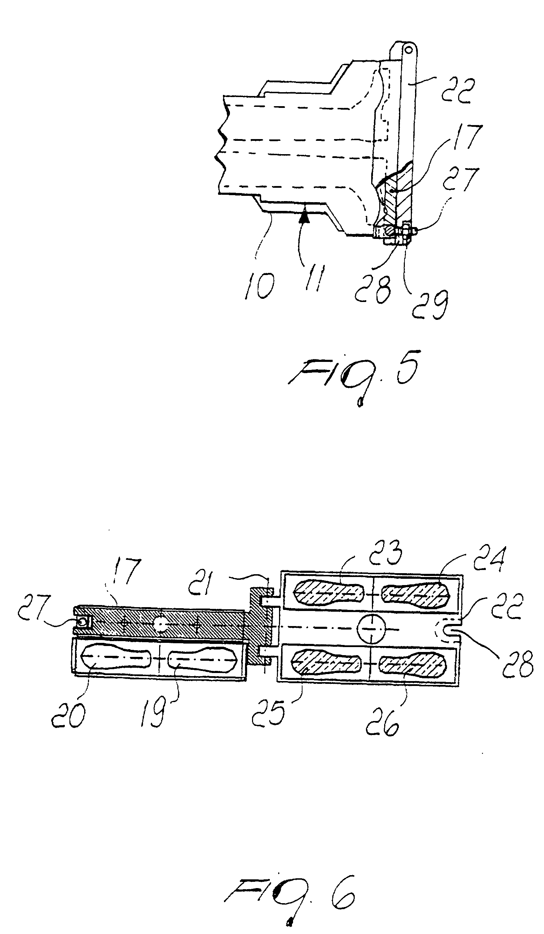

With reference to Figures 3 to 6, a mold holder for molds for manufacturing boots or the like made of plastics according to the invention has a structure which comprises a footing 10 for supporting a mold generally designated by the reference numeral 11, which is provided with an upper cover 12 which is articulated thereto about a horizontal axis which is arranged to the rear with respect to the mold 11.

The cover 12 is moved by a hydraulic opening and closure cylinder 13 which acts between the cover 12 and the footing 10.

In front of the footing 10 there is a door, generally designated by the reference numeral 14, which can rotate about an axis 15 which is longitudinal with respect to the mold 11, the axis being supported by a pivot 16 which protrudes from the footing 10.

The door 14 is moved by a hydraulic cylinder which is not shown in the figures for the sake of simplicity.

According to the invention, the door 14 comprises a transverse frame 17 which is constituted in practice by a rod-like element which is bolted to the pivot 16 and is arranged below the surface 18 that supports the mold 11 on the footing 10.

Also according to the invention, the frame 17 extends to a level which lies above the maximum dimensions of the right and left dummy molds 19 and 20 respectively, which are fixed below the footing 10 and are also fixed frontally with respect to the door 14.

In this embodiment, a plate-like support 22 is pivoted to the frame 17 so that it rotates about an axis 21 which lies outside the front dimensions of the mold 11 and is perpendicular to the supporting surface 18; in this case, the support 22 supports two pairs of right and left soles 23, 24 and 25, 26 which are arranged so that the first pair faces the bottom of the mold 11 and the second pair faces the two dummy molds 19 and 20.

The frame 17 and the support 22 can be locked to each other by using devices or adopting solutions of various kinds.

A first solution can be to provide the frame 17 with a rotating (hinged) threaded pin 27 which enters an open slotted hole 28 of the support 22.

A hexagonal locking nut 29 is screwed onto the pin 27.

In a second solution, not shown, a threaded pin protrudes at right angles from the frame 17 and is adapted to fit, by passing through it, in a slotted hole of the support in order to be coupled to a locking nut which is optionally provided with a handwheel for actuation.

The pivoting between the frame 17 and the support 22 must of course be provided so that they can be arranged parallel to each other and rest against each other.

Accordingly, the support 22 can be conveniently opened with respect to the frame 17 during tooling, freeing the front dimensions so that the mold 11 can be extracted from the footing 10.

Moreover, the rotation of the support 22 also frees the region of the dummy molds 19 and 20 and places the soles 23, 24, 25 and 26 in front of the operator, accordingly making fitting and removing less troublesome.

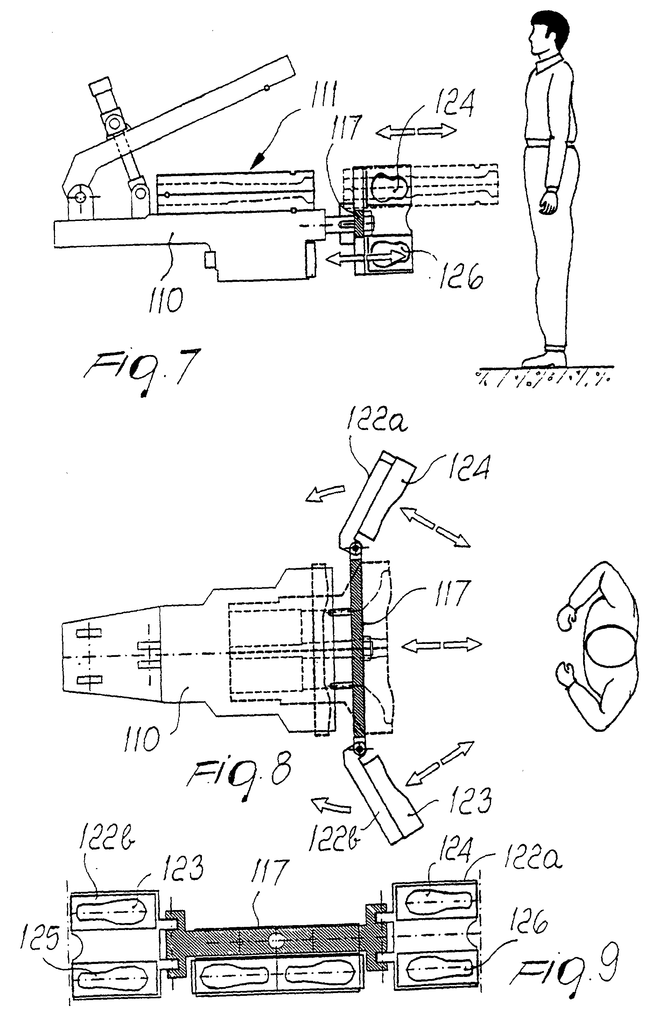

With reference to Figures 7 to 9, a second embodiment provides for a frame 117 which is rotatably rigidly coupled to the base, now designated by the reference numeral 110, for the mold, now designated by the reference numeral 111, but in this case respective supports 122a and 122b, one for the right soles 123 and 125 and one for the left soles 124 and 126, are pivoted at both ends of the frame 117 so as to rotate about the corresponding axes that lie outside the front dimensions of the mold 111.

This embodiment is less bulky than the preceding one and can be used conveniently in case of confined tooling regions and machines with several mold holder modules.

In both embodiments, the mold 11 or 111 can be interposed between thermostat-controlled plates, not shown in the figures, for heating/cooling it.

In order to provide a faster mold replacement operation it is in fact important for said mold to reach the operating temperature as quickly as possible after fitting.

The shells are currently heated by means of electric resistors which are coupled to the machine by means of adapted plugs; the adoption of thermostat-controlled plates allows to preheat the molds before fitting, accordingly reaching the primary temperatures faster after fitting and allowing the new molds to be immediately ready for molding.

In practice it has been observed that the intended aim and objects of the present invention have been achieved.

The new structure of the mold holder in fact allows easier and less troublesome removal and refitting of the mold and of its parts, said operation being possible by removal and insertion in a horizontal direction.

Moreover, access to the soles and to the dummy molds is now particular handy.

This provides the conditions for automating the removal and refitting of the molds by means of pallets and computerized magazines similar to the solutions that have already been adopted in the field of machine tools.

The invention thus conceived is susceptible of numerous modifications and variations, all of which are within the scope of the inventive concept.

All the details may also be replaced with other technically equivalent elements.

In practice, the materials employed, so long as they are compatible with the contingent use, as well as the dimensions, may be any according to requirements.

## Claims

1. A mold holder for molds for manufacturing boots or the like made of plastics which comprises a footing (10,110) for supporting a mold (11,111), with an upper closure cover (12) articulated to said footing and with a front door (14) for soles which can rotate about an axis (15) which is longitudinal with respect to the mold, and said door (14) comprises a transverse frame (17,117) which is supported by said footing (10,110), can rotate about said longitudinal axis (15) and is arranged below the surface that supports said mold (11,111), said frame (17,117) supporting at least one sole support (22,122a,122b) which is pivoted so as to rotate about a corresponding axis which lies outside the front dimensions of said mold.

2. The mold holder according to claim 1, **characterized in that** said frame of said door comprises a rod-like element which is bolted to a pivot (16) for articulation to said footing (10) about said rotation axis (15), said rod-like element being arranged below the surface that supports said mold on said base.

3. The mold holder according to claim 1, **characterized in that** said frame of said door extends to a level which is higher than the maximum dimensions of right and left dummy molds (19,20), which are fixed below said footing (10) and likewise frontally with respect to said door (14).

4. The mold holder according to claim 3, **characterized in that** said frame of said door pivotally supports, so that it is rotatable about said axis which lies outside the front dimensions of said mold and is perpendicular to the supporting surface thereof, said support for two pairs of right and left soles (23,24,25,26) which are arranged so that a first pair of soles faces the bottom of said mold and a second pair of soles faces said dummy molds (19,20).

5. The mold holder according to claim 1, **characterized in that** said frame of said door pivotally supports, at both ends of said frame, respective supports (122a,122b), one for the right soles and one for the left soles, said supports being pivoted so as to rotate about corresponding axes which lie outside the front dimensions of said mold.

6. The mold holder according to claim 1. **characterized in that** said frame of said door and said support are locked to each other by means of a threaded pin (27) which is hinged to said frame (17) and enters an open slotted hole (28) of said support, a locking nut (29) being screwed on said pin (27).

7. The mold holder according to claim 1, **characterized in that** said frame of said door and said support are locked to each other by means of a threaded pin which protrudes from said frame at right angles and is adapted to enter a slotted hole of said support in order to be coupled with a locking nut.

8. The mold holder according to claim 1, **characterized in that** said mold is interposed between thermostat-controlled plates for heating/cooling the mold.

## Patentansprüche

1. Formhalter für Formwerkzeuge zur Herstellung von Stiefeln oder dergleichen aus Kunststoff, der umfasst einen Fuss (10, 110) zum Tragen eines Formwerkzeugs (11, 111) mit einem oberen Verschlussdeckel (12), der gelenkig an dem Fuss angebracht ist, und mit einer Vordertür (14) für Sohlen, die sich um eine Achse (15) drehen kann, die in Bezug auf das Formwerkzeug längs gerichtet ist, und die Tür (14) weist einen Querrahmen (17, 117) auf, der von dem Fuss (10, 110) getragen ist, sich um die Längsachse (15) drehen kann und unter der Fläche angeordnet ist, die das Formwerkzeug (11, 111) trägt, wobei der Rahmen (17, 117) mindestens einen Sohlenträger (22, 122a, 122B) trägt, der drehbar gelagert ist, so dass er sich um eine entsprechende Achse drehen kann, die ausserhalb der vorderen Abmessungen des Formwerkzeugs liegt.

2. Formhalter nach Anspruch 1, **dadurch gekennzeichnet, dass** der Rahmen der Tür ein stabartiges Element aufweist, das für Bewegung des Fusses (10) um die Rotationsachse (15) an einem Drehpunkt (16) angebracht ist, wobei das stabartige Element unter der Fläche angeordnet ist, die das Formwerkzeug auf der Basis trägt.

3. Formhalter nach Anspruch 1, **dadurch gekennzeichnet, dass** der Rahmen der Tür sich auf eine Höhe erstreckt, die höher ist als die maximalen Abmessungen der rechten und linken Blindformen (19, 20), die unter dem Fuss (10) befestigt sind und gleichermassen in Bezug auf die Tür (14) vorne sind.

4. Formhalter nach Anspruch 3, **dadurch gekennzeichnet, dass** der Rahmen der Tür, damit er um die Achse drehbar ist, die ausserhalb der vorderen Abmessungen des Formwerkzeugs liegt und zur Trägerfläche senkrecht ist, den Träger für zwei Paar rechter und linker Sohlen (23, 24, 25, 26) schwenkbar trägt, die so angeordnet sind, dass ein erstes Paar Sohlen dem Boden des Formwerkzeugs zugewandt ist und ein zweites Paar Sohlen den Blindformen (19, 20) zugewandt ist.

5. Formhalter nach Anspruch 1, **dadurch gekennzeichnet, dass** der Rahmen der Tür, an beiden Enden der Rahmens entsprechende Träger (122a, 122b), einen für die rechten Sohlen und einen für die linken Sohlen schwenkbar trägt, damit die Träger so geschwenkt werden, dass sie sich um entsprechende Achsen drehen, die ausserhalb der vorderen Abmessungen des Formwerkzeugs liegen.

6. Formhalter nach Anspruch 1, **dadurch gekennzeichnet, dass** der Rahmen der Tür und der Träger mittels eines Gewindestifts (27) aneinander befestigt sind, der durch ein Scharnier am Rahmen (17) angebracht ist und in ein offenes Schlitzloch (28) des Trägers eintritt, wobei eine Sicherungsmutter (29) auf den Stift (27) aufgeschraubt ist.

7. Formhalter nach Anspruch 1, **dadurch gekennzeichnet, dass** der Rahmen der Tür und der Träger mittels eines Gewindestifts aneinander befestigt sind, der vom Rahmen im rechten Winkel hervorsteht und geeignet ist, in ein Schlitzloch des Trägers einzutreten, damit er mit einer Sicherungsmutter gekoppelt wird.

8. Formhalter nach Anspruch 1, **dadurch gekennzeichnet, dass** das Formwerkzeug zwischen thermostatgeregelten Platten zum Erhitzen/Kühlen des Formwerkzeugs eingesetzt ist.

## Revendications

1. Support de moule destiné aux moules servant à la fabrication de bottes ou d'articles similaires en plastique qui comprend un bâti (10, 110) pour supporter un moule (11, 111), avec un couvercle de fermeture supérieur (12) articulé sur ledit bâti et avec une porte avant (14) pour les semelles qui peut pivoter autour d'un axe (15) qui est longitudinal par rapport au moule, et ladite porte (14) comprend un châssis transversal (17, 117) qui est supporté par ledit bâti (10, 110), peut tourner autour dudit axe longitudinal (15) et est agencé sous la surface qui supporte ledit moule (11, 111). Ledit châssis (17, 117) supportant au moins un support de semelle (22, 122a, 122b) qui est pivoté de façon à tourner autour d'un axe correspondant qui s'étend à l'extérieur des dimensions frontales dudit moule.

2. Support de moule selon la revendication 1, **caractérisé en ce que** ledit châssis de ladite porte comprend un élément en forme de tige qui est boulonné à un pivot (16) pour être articulé audit bâti (10) autour dudit axe de rotation (15), ledit élément en forme de tige étant disposé sous la surface qui supporte ledit moule sur ledit bâti.

3. Support de moule selon la revendication 1, **caractérisé en ce que** ledit châssis de ladite porte s'étend jusqu'à un niveau qui est supérieur aux dimensions maximales des moules factices (19, 20) de droite et de gauche, qui sont fixés sous ledit bâti (10) et aussi frontalement par rapport à ladite porte (14).

4. Support de moule selon la revendication 3, **caractérisé en ce que** ledit châssis de ladite porte est supporté en pivot, de façon telle qu'il puisse tourner autour dudit axe qui s'étend à l'extérieur des dimensions frontales dudit moule et qui est perpendiculaire à la surface portante de celui-ci, ledit support pour deux paires de semelles gauche et droite (23, 24, 25, 26) qui sont agencées de façon telle que qu'une première paire de semelles fait face au fond dudit moule et une seconde paire de semelles fait face audits moules factices (19, 20).

5. Support de moule selon la revendication 1, **caractérisé en ce que** ledit châssis de ladite porte supporte en pivot, aux deux extrémités dudit châssis, les supports respectifs (122a, 122b). L'un pour les semelles droites et l'un pour les semelles gauches, lesdits supports étant pivotés de façon à tourner autour des axes correspondants qui s'étendent à l'extérieur des dimensions frontales dudit moule.

6. Support de moule selon la revendication 1, **caractérisé en ce que** ledit châssis de ladite porte et ledit support sont verrouillés l'un à l'autre au moyen d'une tige filetée (27) qui est articulée audit châssis (17) et entre dans une fente d'insertion ouverte (28) dudit support, un écrou de verrouillage (29) étant vissé sur ladite tige (27).

7. Support de moule selon la revendication 1, **caractérisé en ce que** ledit châssis de ladite porte et ledit support sont verrouillés l'un à l'autre au moyen d'une tige filetée qui s'étend dudit châssis à angle droit et est adaptée pour entrer dans une fente d'insertion dudit support pour être couplée avec un écrou de verrouillage.

8. Support de moule selon la revendication 1, **caractérisé en ce que** ledit moule est interposé entre des plaques contrôlées par thermostat pour chauffer/refroidir le moule.
